# EUROPÄISCHE PATENTSCHRIFT

(11) **EP 2 739 689 B1**
(45) Veröffentlichungstag und Bekanntmachung des Hinweises auf die Patenterteilung: **01.11.2017**
(21) Anmeldenummer: 12753699.3
(22) Anmeldetag: 24.08.2012
(51) Int. Cl.: C09D 5/10, C09D 7/12, F24J 2/46, C08K 3/20, C08K 3/22, C08K 3/36

(54) **SCHICHTMATERIAL ZUM KORROSIONSSCHUTZ UND SOLARRECEIVER MIT EINEM SOLCHEN SCHICHTMATERIAL**
LAYER MATERIAL FOR CORROSION PROTECTION AND SOLAR RECEIVER HAVING SUCH A LAYER MATERIAL
MATÉRIAU STRATIFIÉ POUR LA PROTECTION CONTRE LA CORROSION ET RÉCEPTEUR SOLAIRE COMPRENANT UN TEL MATÉRIAU STRATIFIÉ

(30) Priorität: 16.09.2011 DE 102011082835
(43) Veröffentlichungstag der Anmeldung: 11.06.2014
(73) Patentinhaber: Siemens Aktiengesellschaft, 80333 München (DE)
(72) Erfinder: LÜTHEN, Volkmar, 14169 Berlin (DE); WINKLER, Gabriele, 13587 Berlin (DE)
(86) Internationale Anmeldenummer: PCT/EP2012/066528
(87) Internationale Veröffentlichungsnummer: WO 2013/037623

(56) Entgegenhaltungen:
- WO-A1-02/22746
- WO-A2-2011/051298
- CN-A- 102 146 225
- US-A1- 2010 313 875

## Beschreibung

Die Erfindung betrifft ein Schichtmaterial zum Korrosionsschutz. Dieses weist ein Bindemittel auf, das aus einem Harz besteht und welches in einem Lösungsmittel gelöst ist. Das Harz enthält mindestens eine der folgenden Substanzen: Oligo- oder Polysiloxan, Silikonharz, Silikon, Silikat und Phosphat. Außerdem enthält das Bindemittel ein Pigment, bestehend aus Mikropartikeln aus Zink mit einem mittleren Durchmesser von mindestens einem Mikrometer, ein weiteres Pigment, bestehend aus Nanopartikeln aus Titanoxid oder Siliziumoxid mit einem mittleren Durchmesser von höchstens 100 nm, und ein weiteres Pigment, bestehend aus Aluminiumoxid, Zirkonoxid oder Siliziumoxid mit einem mittleren Durchmesser dieser Partikel von mindestens 1 µm als Füllstoff. Außerdem betrifft die Erfindung einen Solarreceiver für ein Solarkraftwerk, aufweisend ein Absorberrohr aus einem Metall und ein Hüllrohr aus Glas, das das Absorberrohr unter Ausbildung eines Zwischenraums umgibt, wobei der Zwischenraum hermetisch abgedichtet ist, wobei der von außen zugängliche Teil des Solarreceivers außerhalb des Hüllrohres zumindest teilweise mit einer Schicht aus einem oben genannten ausgehärteten Schichtmaterial ausgestattet ist. Ein Schichtmaterial der eingangs angegebenen Art ist beispielsweise aus der WO 2009/129783 A2 bekannt. Das dort offenbarte Schichtmaterial weist Metallpartikel auf, die mit anorganischen Substanzen umhüllt sein können. Die Umhüllung zielt darauf ab, bessere Ergebnisse im Korrosionsschutz als mit reinen Zinkschichten zu erzielen. Allerdings führt die Umhüllung der Partikel auch dazu, dass die Wirkung des verwendeten Zinks zum Korrosionsschutz abgeschwächt wird. Andererseits verbessern die Umhüllungen der Metallpartikel deren Langzeitwirkung zum Korrosionsschutz, da ein schnelles Korrodieren der Zinkpartikel im Falle eines Freilegens derselben in der Schicht (beispielsweise bei Verletzungen der Schicht) verlangsamt wird. Mit anderen Worten wird eine verbesserte Langzeitwirkung des Korrosionsschutzes durch Verwendung gemantelter Metallpatikel damit erkauft, dass der sofortige Schutzeffekt in der unverletzten Schicht abgeschwächt wird. Gemäß der CN 102146225 A ist ein Schichtmaterial zum Korrosionsschutz offenbart, welches als Bindemittel ein Harz aufweist. In diesem Bindemittel ist ein aus Mikropartikeln bestehendes Zink-Pigment verteilt. Weitere Pigmente bestehen aus Siliziumoxid, welches in Form von Nanopartikeln in der Schichtmatrix vorliegt.

Gemäß der WO 02/22746 A1 ist es weiterhin bekannt, dass Stahlsubstrate mit einer Beschichtung versehen werden können, die aus einem Sol besteht, in dem ein Metalloxid und Siliziumoxid verteilt sind.

Die Aufgabe der Erfindung besteht darin, ein Schichtmaterial zum Korrosionsschutz mit Zinkpartikeln anzugeben, welches sowohl eine verbesserte Korrosionsschutzwirkung als auch eine verbesserte Langzeitstabilität gewährleistet.

Außerdem ist es Aufgabe der Erfindung vorteilhafte Anwendungsgebiete für ein solches Schichtmaterial zu erschließen.

Die Aufgabe wird erfindungsgemäß mit dem eingangs genannten Schichtmaterial dadurch gelöst, dass ein weiteres Pigment, bestehend aus Nanopartikeln aus Titanoxid oder Siliziumoxid, mit einem mittleren Durchmesser von höchstens 100 nm in dem Schichtmaterial vorhanden ist. Auch ist es möglich, eine Mischung aus Titanoxid und Siliziumoxid zu verwenden. Durch Verwendung eines Pigments, dessen Partikel nanoskalig sind (im Folgenden durchweg als Nanopartikel bezeichnet) wird vorteilhaft erreicht, dass einerseits eine Umhüllung der verwendeten Mikropartikel aus Zink fortfallen kann. Daher können die Mikropartikel aus Zink vorteilhaft ihre volle Wirkung zum Korrosionsschutz entfalten. Andererseits wird anstelle der Beschichtung der Zinkpartikel das weitere Pigment/die weiteren Pgmente aus Nanopartikeln von Titanoxid und/oder Siliziumoxid verwendet. Dadurch, dass es sich bei diesem Pigment um Nanopartikel handelt, können diese in dem Schichtmaterial auch nach Aushärtung der Schicht noch wandern. Daher bildet sich bei Verwendung der Schicht folgender Schutzmechanismus aus. Das Lacksystem, welches vorzugsweise bereits bei Temperaturen von weniger als 100°C aushärtet, schützt ein metallisches Bauteil vor Korrosion hauptsächlich dadurch, dass die Zinkpigmente (Mikropartikel) als kathodischer Korrosionsschutz dienen. Dies setzt voraus, dass das metallische Bauteil insgesamt edler ist. Dies ist beispielsweise bei Eisen und Stählen der Fall, weil Zink ein Standardpotential von - 0,76 V und Eisen ein Standardpotential von -0,4 V gegenüber Wasserstoff aufweist. Der kathodische Korrosionsschutz, der durch die Zinkpigmente zustande kommt, kann ohne weiteres in Temperaturbereichen von bis zu 300° zum Einsatz kommen.

Ist das Bauteil, vorzugsweise aus einer Eisenlegierung, Witterungseinflüssen ausgesetzt (wie z. B. Feuchtigkeit, Salze, Temperatur), dann werden die Zinkpigmente bevorzugt korrosiv angegriffen und entfalten daher eine Wirkung als Opferanode.

Durch den Einsatz von nanoskaligem Titan oder Siliziumoxid (Nanopartikel) wird die Schichtweiterhin im Falle einer Beschädigung stabilisiert. Diese Stabilisierung wird durch einen Selbstheilungsprozess hervorgerufen. Bei einer Beschädigung werden die Zinkpigmente freigelegt und bilden so eine positive Oberflächenladung aus. Ohne den nun folgenden Selbstheilungsprozess würde das Zink aufgrund des korrosiven Angriffs sehr schnell abgebaut werden und dann keinen Korrosionsschutz mehr gewährleisten können. Allerdings tragen die Nanopartikel aus Titanoxid und/oder Silziumoxid eine negative Oberflächenladung und wandern daher zur Schadstelle. Hierdurch wird die Schadstelle abgedeckt und es kommt auch zu einer Schichtbildung auf den freiliegenden Zinkpigmenten, die an dieser Stelle die Matrix des Schichtmaterials ersetzt. Hierdurch wird der Abbau der Zinkpigmente an der Verletzungsstelle wieder verlangsamt, wodurch die Schicht hinsichtlich ihrer Funktion als selbst ausgeheilt zu bezeichnen ist. Es hat sich nun gezeigt, dass der beschriebene Effekt optimiert werden kann, wenn die Mikropartikel aus Zink einen mittleren Durchmesser von höchstens 100 µm nicht überschreiten, die Herstellung des Schichtmaterials wird weiterhin vorteilhaft vereinfacht, wenn die Nanopartikel aus Titanoxid oder Siliziumoxid einen mittleren Durchmesser von mindestens 10 nm nicht unterschreiten.

Außerdem kann gemäß einer weiteren Ausgestaltung der Erfindung ein weiteres Pigment zugegeben werden, bestehend aus Aluminiumoxid, Zirkonoxid oder Siliziumoxid mit einem mittleren Durchmesser dieser Partikel von mindestens 1 µm. Diese weiteren Pigmente dienen als Füllstoff und verbessern die Hitzestabilität der Beschichtung. Diese kann dann auch höheren Temperaturen widerstehen, wobei in jedem Falle der Schmelzpunkt von Zink berücksichtigt werden muss, der bei 415°C liegt.

Außerdem können weitere Hilfsstoffe zugegeben werden. Hydrophobe Kieselsäure kann als Thixotropierungsmittel und Antisedimentationshilfe (Dispersionsmittel) für die festen Zusatzstoffe dienen. Außerdem verbessert sie mit ihren hydrophoben Eigenschaften auch die Schutzwirkung der herzustellenden Schicht. Es können 1 bis 3Masse-% an hydrophober Kieselsäure zugegeben werden. Neben den bereits erwähnten Substanzen Aluminiumoxid, Zirkonoxid und Siliziumoxid sind in diesem Zusammenhang auch Carbon Nanotubes und Bornitrit Nanotubes zu nennen.

Die eingangs angegebene Aufgabe wird weiterhin durch einen Solarreceiver für ein Solarkraftwerk gelöst, der ein Absorberrohr aus Metall aufweist. Dieses ist in einem Hüllrohr aus Glas untergebracht, so dass ein Zwischenraum zwischen den beiden Rohren entsteht. Der Zwischenraum ist hermetisch abgedichtet. Die Lösung der Aufgabe wird dadurch erreicht, dass der von außen zugängliche Teil des Solarreceivers mit einer Schicht (außerhalb des transparenten Hüllrohres) aus einem ausgehärteten Schichtmaterial ausgestattet ist, welches in der oben bereits beschriebenen Weise ausgestaltet ist. Das Schichtmaterial weist also konkret eine Matrix aus einem Harz auf, welches die bereits erwähnten Substanzen enthält. Außerdem sind als Pigmentmikropartikel aus Zink und als weiteres Pigment Nanopartikel aus Titanoxid und/oder Siliziumoxid in der Matrix eingeschlossen. Da die Schicht ausgehärtet ist, ist das Lösungsmittel aus dem Harz vollständig oder zumindest hauptsächlich verdampft, wodurch das ausgehärtete Schichtmaterial entsteht.

Gemäß einer Ausführungsform des Solarreceivers ist außerdem vorgesehen, dass die hermetische Abdichtung des Zwischenraumes durch eine Schweißnaht gewährleistet wird. Diese Schweißnaht ist erfindungsgemäß an ihrem von außen zugänglichen Teil mit der Schicht aus dem ausgehärteten Schichtmaterial ausgestattet. Hierdurch wird vorteilhaft erreicht, dass der Distanzring zuverlässig vor Korrosion geschützt wird. Der außen zugängliche Teil des Distanzringes grenzt einerseits an das Hüllrohr und andererseits an das Absorberrohr an. Diese Verbindungsstellen können vorzugsweise ebenfalls durch das Schichtmaterial überspannt werden. Hierdurch können auch die Dichtstellen für die hermetische Abdichtung zuverlässig vor Korrosion geschützt werden.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:
- Figur 1 und 2: Ausführungsbeispiele des erfindungsgemäßen Schichtmaterials im schematischen Schnitt und
- Figur 3: ein Ausführungsbeispiel des erfindungsgemäßen Solarreceivers im Längsschnitt.

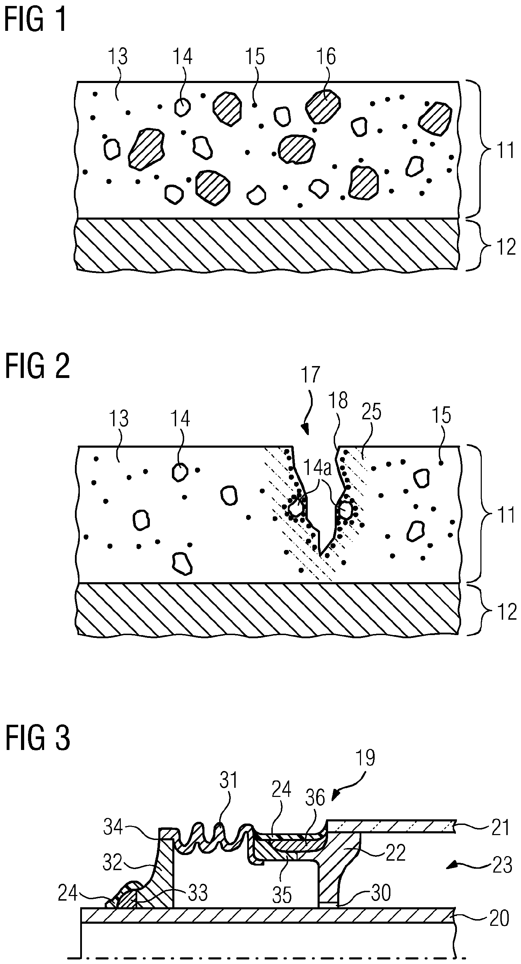

Gemäß Figur 1 ist eine Schicht 11 auf einem Bauteil 12 aufgebracht. Die Schicht besitzt eine Matrix aus einem Bindemittel 13, in das Mikropartikel 14 aus Zink eingelagert sind. Außerdem sind Nanopartikel 15 aus Titanoxid und/oder Siliziumoxid gleichmäßig in dem Bindemittel 13 verteilt. Zusätzlich sind noch Partikel 16 eines Füllstoffes, wie z. B. Aluminiumoxid, in der Matrix vorgesehen. Figur 2 stellt einen mit Figur 1 vergleichbaren Schichtaufbau dar. Allerdings sind hier keine Partikel eines Füllstoffes vorgesehen. Figur 2 zeigt allerdings, wie eine Verletzung 17 in Form eines Risses die Schichtstruktur verändert. Es wird deutlich, dass einzelne Mikropartikel 14a aus Zink in der Rissoberfläche 18 freiliegen. Dies bewirkt eine erhöhte Korrosionsgeschwindigkeit der freiliegenden Mikropartikel 14a, weswegen sich lokal eine positive Oberflächenladung an der Rissoberfläche 18 ausbildet. Da die Nanopatikel 15 aus Oxid in der durch das Bindemittel 13 gebildeten Schichtmatrix wegen ihrer geringen Größe wandern können, wandern diese innerhalb einer Diffusionszone 25 (strichpunktiert schraffiert) aufgrund ihrer negativen Oberflächenladung zur Rissoberfläche 18 und führen dort zu einer Aufkonzentration. Insbesondere werden auch die freiliegenden Mikropartikel 14a aus Zink abgedeckt, weswegen ihre Aktivität wieder verringert wird und sich auf einem Niveau einpendelt, welches mit demjenigen der im Bindemittel 13 vollständig eingeschlossenen Mikropartikel 14 aus Zink vergleichbar ist. Daher kann hinsichtlich der Korrosionsschutz-Eigenschaften der Schicht 11 von einer Selbstheilung gesprochen werden. Zwar ist die Verletzung 17 noch vorhanden, jedoch wird die Korrosion in diesem Bereich der Schicht nicht beschleunigt, weswegen das Bauteil 12 auch an dieser Stelle vor einem Korrosionsangriff geschützt bleibt.

Figur 3 zeigt einen Solarreceiver 19, der aus einem Absorberrohr 20, einem Hüllrohr 21 und einem Distanzring 22 aufgebaut ist. Der Distanzring 22 führt zu einer mittigen Lagerung des Absorberrohrs 20 im Hüllrohr 21, wodurch ein Zwischenraum 23 entsteht. Dieser Zwischenraum 23 ist als Isolation gedacht.

Damit die unterschiedlichen Ausdehnungskoeffizienten des Hüllrohrs 21 und des Absorberrohrs 20 ausgeglichen werden können, ist der Distanzring 22 durch einen (übertrieben dargestellten) Spalt 30 (beispielsweise eine Spielpassung) verschiebbar auf dem Absorberrohr 20 gelagert. Um eine hermetische Versiegelung des Innenraums 23 zu erhalten, ist zum Ausgleich der Axialbewegungen des Distanzrings 22 auf dem Absorberrohr 20 ein Faltenbalg 31 aus Blech vorgesehen. Dieser stützt sich über einen Grundring 32 auf dem Absorberrohr 20 ab, wo dieser mit einer Schweißverbindung 33 fixiert ist. Die Verbindung zwischen Faltenbalg 31 und Grundring 32 kann eine Pressverbindung 34 sein. Die Verbindung zwischen dem Distanzring 22 und dem Faltenbalg 31 erfolgt über einen Zwischenring 35, der ebenfalls über eine Pressverbindung mit dem Faltenbalg 31 verbunden ist. Der Verbindungsring 35 sowie der Distanzring 22 sind an ihrer Stoßstelle mit einer Schweißverbindung 36 verbunden. Hierdurch kommt die hermetische Abdichtung zwischen dem Distanzring 22 und dem Zwischenring 35 zustande.

Um den Bereich der hermetischen Abdichtung des Zwischenraums 23 durch die Schweißnähte 33, 36 zu schützen, ist eine Schicht 24 in diesen Bereichen aufgebracht, die beispielsweise in nicht näher dargestellter Weise wie in Figur 1 aufgebaut ist. Diese bewirkt einen Korrosionsschutz der von außen zugänglichen Teile der Schweißnähte 33, 36. Die angrenzenden Teile können ebenfalls beschichtet werden (nicht dargestellt).

Als Bindemittel können beispielsweise Methyl- oder Methylphenylsilikonharzlösungen verwendet werden. Handelsnamen für diese Substanzen sind beispielsweise Silres® REN50, REN60 oder REN80 der Firma Wacker. Eine andere Möglichkeit besteht in der Verwendung von hydrophober Kieselsäure. Beziehen lässt sich diese beispielsweise unter dem Handelsnamen HDK H13L oder HDK H15 bei der Firma Wacker. Gelöst werden diese Substanzen in Butanol, Xylol, oder einem Gemisch aus diesen Lösungsmitteln. Bei Verwendung dieser Lösungsmittel reicht zur Trocknung bereits Raumtemperatur. Wird Kieselsäure in einer Konzentration von 1 bis 3 Gew.-% zu dem Schichtmaterial hinzugegeben, entfaltet diese ihre Wirkung sowohl als Thixotropierungsmittel als auch als Dispersionsmittel für die festen Zusatzstoffe. Außerdem verleiht sie der Oberfläche der zu erzeugenden Schicht hydrophobe Eigenschaften. Die Verarbeitung des genannten Schichtmaterials kann beispielsweise als Lack erfolgen. Die verwendeten Partikel werden zu einem Lacksystem verarbeitet, welches die genannten Lösemittel und Bindemittel enthält und welches als Dispersion der Partikel verarbeitet wird. Wird ein spezielles Methylpolysiloxanharz (beispielsweise Silres® MSF 100 der Firma Wacker) verwendet, kann der Lack unter Verwendung von Katalysatoren bei Raumtemperatur und einer relativen Luftfeuchtigkeit von 50 % innerhalb einer halben Stunde so weit aushärten, dass er grifffest ist. Als Katalysator können Säuren, Basen, Zinn, Zink, Titan und Zirkon-Verbindungen zum Einsatz kommen. Da die Mikropartikel ohnehin aus Zink bestehen, ist in dem Lacksystem für die Anwesenheit eines Katalysators gesorgt.

Das Lacksystem kann durch Spritzen, Tauchen oder Streichen aufgetragen werden. Vorteilhaft für die Herstellung von Korrosionsschutzschichten auf den Anwendungsfall von Solarreceivern ist das Spritzen mit einer Druckluftpistole. Dies kann vorteilhaft an der Baustelle erfolgen. Hierdurch sind auch Reparaturen von bereits installierten Anlagen ohne weiteres möglich. Andererseits lässt sich eine Druckluftpistole auch gut in den Verfahrensablauf einer Erstmontage des Solarreceivers integrieren. Hierbei können beispielsweise pneumatisch gesteuerte Automatikpistolen zum Einsatz kommen.

## Patentansprüche

1. Schichtmaterial zum Korrosionsschutz
• mit einem Bindemittel (13) aus einem Harz, enthaltend mindestens eine der folgenden Substanzen: Oligo- oder Polysiloxan, Silikonharz, Silikon, Silikat, Polyphosphat, und welches in einem Lösungsmittel gelöst ist
• mit einem Pigment, bestehend aus Mikropartikeln (14) aus Zink mit einem mittleren Durchmesser von mindestens 1 µm,
• mit einem weiteren Pigment, bestehend aus Nanopartikeln (15) aus Titanoxid oder Siliziumoxid mit einem mittleren Durchmesser von höchstens 100 nm,
**dadurch gekennzeichnet,**
**dass** in diesem ein weiteres Pigment, bestehend aus Aluminiumoxid, Zirkonoxid oder Siliziumoxid mit einem mittleren Durchmesser dieser Partikel (16) von mindestens 1 µm als Füllstoff enthalten ist.

2. Schichtmaterial nach Anspruch 1,
**dadurch gekennzeichnet,**
**dass** die Mikropartikel (14) aus Zink einen mittleren Durchmesser von höchstens 100 µm aufweisen.

3. Schichtmaterial nach einem der Ansprüche 1 oder 2
**dadurch gekennzeichnet,**
**dass** die Nanopartikel (15) aus Titanoxid oder Siliziumoxid einen mittleren Durchmesser von mindestens 10 nm aufweisen.

4. Solarreceiver für ein Solarkraftwerk, aufweisend
• ein Absorberrohr (20) aus einem Metall,
• ein Hüllrohr (21) aus Glas, das das Absorberrohr (20) unter Ausbildung eines Zwischenraumes (23) umgibt,
wobei der Zwischenraum (23) hermetisch abgedichtet ist,
**dadurch gekennzeichnet,**
**dass** der von außen zugängliche Teil des Solarreceivers außerhalb des Hüllrohres zumindest teilweise mit einer Schicht (24) aus einem ausgehärteten Schichtmaterial gemäß einem der vorangehenden Ansprüche ausgestattet ist.

5. Solarreceiver nach Anspruch 4,
**dadurch gekennzeichnet,**
**dass** die hermetische Abdichtung des Zwischenraumes (23) durch eine Schweißnaht (22) gewährleistet ist, wobei die Schweißnaht an ihrem von außen zugänglichen Teil mit der Schicht (24) aus einem ausgehärteten Schichtmaterial gemäß einem der vorangehenden Ansprüche ausgestattet ist.

## Claims

1. Layer material for corrosion protection,
• comprising a binder (13) consisting of a resin, containing at least one of the following substances: oligosiloxane or polysiloxane, silicone resin, silicone, silicate, polyphosphate, and which is dissolved in a solvent,
• comprising a pigment consisting of microparticles (14) of zinc having a mean diameter of at least 1 µm,
• comprising a further pigment consisting of nanoparticles (15) of titanium oxide or silicon oxide having a mean diameter of at most 100 nm,
**characterized in that** it contains a further pigment consisting of aluminum oxide, zirconium oxide or silicon oxide, with a mean diameter of these particles (16) of at least 1 µm, as filler.

2. Layer material according to Claim 1, **characterized in that** the microparticles (14) of zinc have a mean diameter of at most 100 µm.

3. Layer material according to either of Claims 1 and 2, **characterized in that** the nanoparticles (15) of titanium oxide or silicon oxide have a mean diameter of at least 10 nm.

4. Solar receiver for a solar power plant, comprising
• an absorber tube (20) made of a metal,
• an envelope tube (21) made of glass, which surrounds the absorber tube (20) to form an interstice (23),
wherein the interstice (23) is hermetically sealed, **characterized in that** the externally accessible part of the solar receiver outside the envelope tube is equipped at least partially with a layer (24) made of a cured layer material according to one of the preceding claims.

5. Solar receiver according to Claim 4, **characterized in that** the hermetic seal of the interstice (23) is ensured by a weld seam (22), wherein the weld seam is equipped on the externally accessible part thereof with the layer (24) made of a cured layer material according to one of the preceding claims.

## Revendications

1. Matériau stratifié pour une protection vis-à-vis de la corrosion comportant :
• un liant (13) ayant une résine contenant au moins l'une des substances suivantes : oligosiloxane ou polysiloxane, résine de silicone, silicone, silicate, polyphosphate, et qui est dissous dans un solvant,
• un pigment constitué de microparticules (14) de zinc ayant un diamètre moyen d'au moins 1 µm,
• un autre pigment constitué de nanoparticules (15) d'oxyde de titane ou d'oxyde de silicium ayant un diamètre moyen d'au plus 100 nm,
**caractérisé**
**en ce que** le matériau stratifié comporte en tant que matière de remplissage un autre pigment constitué d'oxyde d'aluminium, d'oxyde de zirconium ou d'oxyde de silicium ayant un diamètre moyen de particules (16) d'au moins 1 µm.

2. Matériau stratifié suivant la revendication 1,
**caractérisé**
**en ce que** les microparticules (14) en zinc ont un diamètre moyen d'au plus 100 µm.

3. Matériau stratifié suivant la revendication 1 ou 2,
**caractérisé**
**en ce que** les nanoparticules (15) en oxyde de titane ou en oxyde de silicium ont un diamètre moyen d'au moins 10 nm.

4. Récepteur solaire pour une installation de puissance solaire comportant :
• un tube (20) absorbeur en un métal,
• un tube (21) enveloppe en verre, qui entoure le tube (20) absorbeur pour former un interstice (23),
dans lequel l'interstice (23) est étanche de manière hermétique,
**caractérisé**
**en ce que** la partie accessible de l'extérieur du récepteur solaire à l'extérieur du tube enveloppe est muni au moins partiellement d'une couche (24) en un matériau stratifié durci suivant l'une des revendications précédentes.

5. Récepteur solaire suivant la revendication 4,
**caractérisé**
**en ce que** l'étanchéité hermétique de l'interstice (23) est assurée par un cordon (22) de soudure, le cordon de soudure sur sa partie accessible de l'extérieur étant muni de la couche (24) en un matériau stratifié durci suivant l'une des revendications précédentes.
